# EUROPEAN PATENT SPECIFICATION

(11) **EP 2 633 739 B1**
(45) Date of publication and mention of the grant of the patent: **26.05.2021**
(21) Application number: 11781916.9
(22) Date of filing: 26.10.2011
(51) Int. Cl.: C08K 5/42

(54) **SALT MODIFIED INHERENTLY ELECTROSTATIC DISSIPATIVE POLYMERS**
SALZMODIFIZIERTE INHÄRENT ELEKTROSTATISCH DISSIPATIVE POLYMERE
POLYMÈRES INTRINSÈQUEMENT DISSIPATEURS ÉLECTROSTATIQUES MODIFIÉS PAR UN SEL

(30) Priority: 26.10.2010 US 406596 P
(43) Date of publication of application: 04.09.2013
(73) Proprietor: Lubrizol Advanced Materials, Inc., Cleveland, OH 44141-3247 (US)
(72) Inventor: LU, Qiwei, Seven Hills Ohio 44131 (US); PIEDRAHITA, Carlos A., Mentor Ohio 44060 (US); ECKSTEIN, Yona, Coconut Creek Florida 33066 (US); LUDLOW, III, James M., Sagamore Hills Ohio 44067 (US)
(74) Representative: dompatent von Kreisler Selting Werner - Partnerschaft von Patent- und Rechtsanwälten mbB
(86) International application number: PCT/US2011/057783
(87) International publication number: WO 2012/058253

(56) References cited:
- EP-A1- 0 422 879
- EP-A1- 1 178 082
- EP-A1- 2 599 821
- WO-A1-2006/039230
- WO-A2-02/02657
- JP-A- 2005 280 773
- US-B1- 6 284 823

## Description

### BACKGROUND OF THE INVENTION

The present invention relates to electrostatic dissipative polymers and blends, including thermoplastic polyurethanes (TPU) containing compositions.

The formation and retention of charges of static electricity on the surface of most plastics is well known. Plastic materials have a significant tendency to accumulate static electrical charges due to low electrical conductivity. This type of formation and retention of charges of static electricity can be problematic. The presence of static electrical charges on sheets of thermoplastic film, for example, can cause the sheets to adhere to one another thus making their separation for further processing more difficult. Moreover, the presence of static electrical charges causes dust to adhere to items packaged in a plastic bag, for example, which may negate any sales appeal.

The increasing complexity and sensitivity of microelectronic devices makes the control of static discharge of particular concern to the electronics industry. Even a low voltage discharge can cause severe damage to sensitive devices. The need to control static charge buildup and dissipation often requires the entire assembly environment for these devices to be constructed of partially conductive materials. It also may require that electrostatic protective packages, tote boxes, casings, and covers be made from conductive polymeric materials to store, ship, protect, or support electrical devices and equipment.

The prevention of the buildup of static electrical charges which accumulate on plastics during manufacture or use has been accomplished by the use of various electrostatic dissipative (ESD) materials. These materials can be applied as a coating which may be sprayed or dip coated on the article after manufacture, although this method usually results in a temporary solution. Alternatively, these materials can be incorporated into a polymer used to make the article during processing, thereby providing a greater measure of permanence.

However, the incorporation of these lower molecular weight electrostatic dissipative materials (antistatic agents) into the various matrix or base polymers has its own limitations. For example, the high temperatures required for conventional processing of most polymers may damage or destroy the antistatic agents, thereby rendering them useless with respect to their ESD properties. Moreover, many of the higher molecular weight ESD agents are not miscible with the matrix or base polymers employed. In addition, the use of antistatic agents may only provide short term ESD properties to the compositions in which they are used. Their performance and effectiveness is also often impacted by humidity. There is a need to provide good ESD properties without these drawbacks and limitations.

Furthermore, a large number of antistatic agents are also either cationic or anionic in nature. These agents tend to cause the degradation of plastics, particularly PVC, and result in discoloration or loss of physical properties. As noted above, other antistatic agents have significantly lower molecular weights than the base polymers themselves. Often these lower molecular weight antistatic agents possess undesirable lubricating properties and are difficult to incorporate into the base polymer. Incorporation of the lower molecular weight antistatic agents into the base polymers often will reduce the moldability of the base polymer because the antistatic agents can move to the surface of the plastic during processing and frequently deposit a coating on the surface of the molds, possibly destroying the surface finish on the articles of manufacture. In severe cases, the surface of the article of manufacture becomes quite oily and marbleized. Additional problems which can occur with lower molecular weight ESD agents are loss of their electrostatic dissipative capability due to evaporation, the development of undesirable odors, or promotion of stress cracking or crazing on the surface of an article in contact with the article of manufacture.

There are several examples of high molecular weight electrostatic dissipative agents in the prior art. In general, these additives have been high molecular weight homopolymers or copolymers of ethylene oxide or similar materials such as propylene oxide, epichlorohydrin, glycidyl ethers, and the like. It has been a requirement that these additives be high molecular weight materials to overcome the problems mentioned above.

For example, US Patent 6,140,405 provides polymers for use with electronic devices, and specifically polymers containing a halogen-containing salt for electrostatic dissipation. EP1178082 discloses polymer compositions comprising an inherently dissipative polymer and a halogen-free metal salt of a hydrocarbyl-substituted benzene sulfonic acid. The compositions are prepared by mixing the polymer with the halogen -free metal salt of a hydrocarbyl-substituted benzene sulfonic acid.

EP0422879, WO2006/039230 and WO02/02657 disclose electrostatic dissipative polymers and blend including TPU-containing compositions.

There is also continued pressure to reduce the presence of halogens in general, both in articles and generally in the environment. As many ESD additives contain halogens, the drive to reduce and/or eliminate halogen content creates difficulties when trying to maintain the ESD properties needed in many applications. The present invention provides a halogen-free ESD additive that provides good ESD performance while allowing for the reduction and/ or elimination of halogen content in ESD materials. The present invention also overcomes one or more of the other problems associated with conventional ESD additives discussed above.

The present invention solves the problem of obtaining inherently electrostatic dissipative polymers or additives which exhibit relatively low surface and volume resistivities. These electrostatic dissipative polymers in turn can be incorporated in base polymer compositions useful in the electronics industry without producing other undesirable properties in a finished article of manufacture.

### SUMMARY OF THE INVENTION

The present invention provides a composition comprising: (a) an inherently dissipative polymer including a thermoplastic polyurethane made by reacting (i) at least one polyol intermediate with (ii) at least one diisocyanate and (iii) at least one chain extender; and
(b) a halogen-free metal salt of an amidoalkanesulfonic acid, a hydrocarbyl-substituted benzenesulfonic acid, or a mixture thereof, or a polymer derived from said halogen-free metal salt of an amidoalkanesulfonic acid, a hydrocarbyl-substituted benzenesulfonic acid, or a mixture thereof, wherein said halogen free metal salt is a salt of lithium.

In some embodiments, component (b) includes a halogen-free metal salt of an amidoalkanesulfonic acid or polymer derived from said acid where said acid may be represented by the formula: 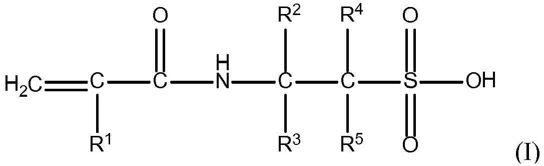 wherein R¹ is hydrogen or a hydrocarbyl group; and each R², R³, R⁴ and R⁵ is independently hydrogen, a hydrocarbyl group, or -CH₂SO₃H.

In some embodiments, component (b) includes a halogen-free metal salt of a hydrocarbyl-substituted benzenesulfonic acid or polymer derived from said acid where said acid may be represented by the formula: 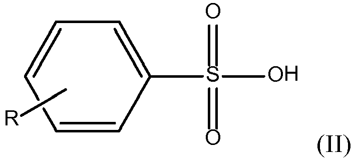 where R is a hydrocarbyl group containing from 2 to 24 or 20 carbon atoms. In some embodiments, the acid of formula (II) may contain one or more additional substituent groups, where the additional substituent group may be located anywhere on the aromatic ring, just as the R group above is shown, and may contain 1 to 2 carbon atoms.

In some embodiments, the compositions of the present invention may further include one or more lithium-containing salts other than component (b). In other embodiments, the compositions of the present invention are substantially free to free of any lithium-containing salts other than those of the present invention, and in still other embodiments the compositions of the present invention are substantially free to free of any salt other than those described herein for component (b).

The invention includes static dissipative polymer compositions comprising an inherently dissipative polymer, which is a modified polymer, creating a special category of thermoplastic elastomers. The thermoplastic elastomers which are used in the invention include a thermoplastic polyurethane, In other embodiments, the inherently dissipative polymer is blended with one or more additional polymers to provide a static dissipative polymer composition. For example, the compositions of the invention may include blends of two or more of the following: a TPU (including but not limited to a polyester-based TPU, a polyether-based TPU, a TPU containing both polyester and polyether groups), a polycarbonate, a polyolefin, a styrenic polymer, an acrylic polymer, a polyoxymethylene polymer, a polyamide, a polyphenylene oxide, a polyphenylene sulfide, a polyvinylchloride, a chlorinated polyvinylchloride; where the polymer blend may used in the preparation of the inherently dissipative polymer, and/or where the inherently dissipative polymer may be blended with one or more additional polymers, resulting in a static dissipative polymer composition comprising the inherently dissipative polymer. In some embodiments, the inherently dissipative polymer (IDP) used in the invention is a polyethylene glycol-based IDP, a polypropylene glycol-based IDP, a polyethylene glycol-polypropylene glycol-based IDP, or any combination thereof. The compositions of the present invention may also include some amount of polyester-based IDP's. However, it is generally known that polyester based IDP's can have salt blooming problems, where a salt does not stay dispersed in the composition but instead blooms out to the surface of the polymer. The present invention contemplates compositions containing polyester based IDPs but in some embodiments is focused on embodiments that do not have blooming problems. In some of these embodiments, the compositions are essentially or even free of polyester based IDP's. In some of these embodiments, the compositions may contain polyester-based IDP's in combination with polyether-based IDP's, where the polyester-based IDP's are present at a level below that which causes salt blooming issues. This level may vary from composition to composition and from polyester-based IDP to polyester-based IDP. In some embodiments, the compositions contain no more than 10, 5, 2, 1, or even 0.5 percent by weight, based on the overall composition, of polyester-based IDP.

The present invention provides a shaped polymeric article comprising any of the inherently dissipative polymer compositions described herein. For example: packaging materials for electronic parts; internal battery separators for use in the construction of lithium-ion batteries; parts for clean room equipment and applications; fibers; or combinations thereof.

The present invention also provides a process for making an inherently dissipative polymer composition including the steps of: mixing (a) an inherently dissipative polymer including a thermoplastic polyurethane made by reacting (i) at least one polyol intermediate with (ii) at least one diisocyanate and (iii) at least one chain extender and (b) a halogen-free metal salt of an amidoalkanesulfonic acid, a hydrocarbyl-substituted benzenesulfonic acid, or a mixture thereof, or a polymer derived from said halogen-free metal salt of an amidoalkanesulfonic acid, a hydrocarbyl-substituted benzenesulfonic acid, or a mixture thereof, wherein said halogen-free metal salt is a salt of lithium. In the process of the present invention, component (b) may be compounded into the inherently dissipative polymer, resulting in the inherently dissipative polymer composition. In some embodiments, component (b) is added to one or more of the reactants used in the preparation of component (a) and wherein component (b) is present during the polymerization of component (a), resulting in the inherently dissipative polymer composition.

The compositions of the invention may have a surface resistivity of from about 1.0x10⁶ ohm/square to about 1.0x10¹² as measured by ASTM D-257.

Preferred embodiments of the invention are apparent from the dependent claims.

### DETAILED DESCRIPTION OF THE INVENTION

Various features and embodiments of the invention will be described below. The inherently dissipative polymer compositions of the invention include an inherently dissipative polymer where the polymer is modified by a salt. The use of the term composition, as used herein, generally refers to the overall composition, which includes one or more inherently dissipative polymers.

### The Inherently Dissipative Polymer

The compositions of the present invention include an inherently dissipative polymer. That is, a polymer that has electrostatic dissipative (ESD) properties. The inherently dissipative polymer includes comprises a thermoplastic polyurethane elastomer. Such materials may be generally described as polymers having in their backbone structures hard and/or crystalline segments and/or blocks in combination with soft and/or rubbery segments and/or blocks.

The thermoplastic polyurethane is made by reacting at least one polyol intermediate with at least one diisocyanate and at least one chain extender. The polyol intermediate may be a polyester polyol and may be derived from at least one dialkylene glycol and at least one dicarboxylic acid, or an ester or anhydride thereof. The polyol intermediate may be a polyalkylene glycol and/or a poly(dialkylene glycol ester). Suitable polyalkylene glycols include polyethylene glycol, polypropylene glycol, polyethyleneglycol-polypropylene glycol copolymers, and combinations thereof. The polyol intermediate may also be a mixture of two or more different types of polyols. In some embodiments, the polyol intermediate includes a polyester polyol and a polyether polyol.

The polymer component may be a blend of two or more polymers. In some embodiments, the resulting inherently dissipative polymer is itself blended with one or more polymers. Suitable polymers for use in such blends include any of the polymers described above. Suitable polymers also include a TPU (including but not limited to a polyester-based TPU, a polyether-based TPU, a TPU containing both polyester and polyether groups), a polycarbonate, a polyolefin, a styrenic polymer, an acrylic polymer, a polyoxymethylene polymer, a polyamide, a poly(phenylene oxide), a poly(phenylene sulfide), a polyvinylchloride, a chlorinated polyvinylchloride or combinations thereof.

Suitable polymers for use in the blends described herein include homopolymers and copolymers. Suitable examples include:
(i) a polyolefin (PO), such as polyethylene (PE), polypropylene (PP), polybutene, ethylene propylene rubber (EPR), polyethylene-octene elastomer (POE), cyclic olefin copolymer (COC), ethylene vinyl acetate copolymer (EVA), or combinations thereof;
(ii) a styrenic, such as polystyrene (PS), acrylonitrile butadiene styrene (ABS), styrene acrylonitrile (SAN), styrene butadiene rubber (SBR or HIPS), polyalphamethylstyrene, styrene maleic anhydride (SMA), styrenic block copolymers (SBC) (such as styrene-butadiene-styrene copolymer (SBS), styreneisoprene-styrene copolymer (SIS), styrene-ethylene/butylene-styrene copolymer (SEBS), styrene-ethylene/propylene-styrene copolymer (SEPS)), styrene butadiene latex (SBL), SAN modified with ethylene propylene diene monomer (EPDM) and/or acrylic elastomers (for example, PS-SBR copolymers), or combinations thereof;
(iii) a thermoplastic polyurethane (TPU);
(iv) a polyamide, such as Nylon™, including polyamide 6,6 (PA66), polyamide 11 (PA11), polyamide 12 (PA12), a copolyamide (COPA), or combinations thereof;
(v) an acrylic polymer, such as poly(methyl acrylate), poly(methyl methacrylate) (PMMA), a methyl methacrylate styrene (MS) copolymer, or combinations thereof;
(vi) a polyvinylchloride (PVC), a chlorinated polyvinylchloride (CPVC), or combinations thereof;
(vii) a polyoxyemethylene, such as polyacetal;
(viii) a polyester, such as polyethylene terephthalate (PET), polybutylene terephthalate (PBT), polyester elastomers, copolyester elastomers (COPE), glycol modified PET (PETG), polycaprolactone, polylactic acid (PLA), or combinations thereof;
(ix) a polycarbonate (PC), a polyphenylene sulfide (PPS), a polyphenylene oxide (PPO), or combinations thereof;
or combinations thereof.

Polyvinyl chloride (PVC), vinyl polymer, or vinyl polymer material, as used herein, refers to homopolymers and copolymers of vinyl halides and vinylidene halides and includes post halogenated polyvinyl halides such as CPVC. Examples of these vinyl halides and vinylidene halides are vinyl chloride, vinyl bromide, vinylidene chloride and the like. The vinyl halides and vinylidene halides may be copolymerized with each other or each with one or more polymerizable olefinic monomers having at least one terminal CH₂=C< grouping. As examples of such olefinic monomers, there may be mentioned the alpha, beta-olefinically unsaturated carboxylic acids, such as acrylic acid, methacrylic acid, ethyl acrylic acid, alpha-cyano acrylic acid, and the like; esters of acrylic acid, such as methyl acrylate, ethyl acrylate, butyl acrylate, octyl acrylate, ethyl cyanoacrylate, hydroxyethyl acrylate, and the like; esters of methacrylic acid, such as methyl methacrylate, butyl methacrylate, hydroxyethyl methacrylate, and the like; nitriles, such as acrylonitrile, methacrylonitrile, and the like; acrylamides, such as methyl acrylamide, N-methylol acrylamide, N-butoxy methylacrylamide, and the like; vinyl ethers, such as ethyl vinyl ether, chloroethyl vinyl ether, and the like; the vinyl ketones; styrene and styrene derivatives, such as alpha-methyl styrene, vinyl toluene, chlorostyrene, and the like; vinyl naphthalene, allyl and vinyl chloroacetate, vinyl acetate, vinyl pyridine, methyl vinyl ketone; the diolefins, including butadiene, isoprene, chloroprene, and the like; and other polymerizable olefinic monomers of the types known to those skilled in the art. In one embodiment, the polymer component includes polyvinyl chloride (PVC) and/or polyethylene terephthalate (PET).

Polymers suitable for use in the compositions of the present invention may also be described as polymers derived from low molecular weight polyether oligomers, wherein the polymers display relatively low surface and volume resistivities, yet generally are free of excessive levels of extractable anions.

The low molecular weight polyether oligomer useful in the present invention can comprise a homopolymer of ethylene oxide having a number average molecular weight of from about 200 to about 5000. The low molecular weight polyether oligomer can also comprise a copolymer of two or more copolymerizable monomers wherein one of the monomers is ethylene oxide and has a number average molecular weight from about 200 to about 20,000.

Exemplary of the comonomers which can be copolymerized with ethylene oxide are: 1,2-epoxypropane (propylene oxide); 1,2-epoxybutane; 2,3-epoxybutane(cis & trans); 1,2-epoxypentane; 2,3-epoxypentane(cis & trans); 1,2-epoxyhexane; 2,3-epoxyhexane(cis & trans); 3,4-epoxyhexane(cis & trans); 1,2-epoxy heptane; 1,2-epoxydecane; 1,2-epoxydodecane; 1,2-epoxyoctadecane; 7-ethyl-2-methyl-1,2-epoxyundecane; 2,6,8-trimethyl-1,2-epoxynonane; styrene oxide.

Other comonomers which can be used with the ethylene oxide are: cyclohexene oxide; 6-oxabicyclo[3,1,0]-hexane; 7-oxabicyclo[4,1,0]heptane; 3-chloro-1,2-epoxybutane; 3-chloro-2,3-epoxybutane; 3,3-dichloro-1,2-epoxypropane; 3,3,3-trichloro-1,2-epoxypropane; 3-bromo-1,2-epoxybutane, 3-fluoro-1,2-epoxybutane; 3 -iodo-1,2-epoxybutane; 1,1-dichloro-1-fluoro-2,3 - epoxypropane; 1-chloro-1,1-difflouro-2,3-epoxypropane; and 1,1,1,2-pentachloro-3,4-epoxybutane.

Typical comonomers with at least one ether linkage useful as comonomers are exemplified by: ethyl glycidyl ether; n-butyl glycidyl ether; isobutyl glycidyl ether; t-butyl glycidyl ether; n-hexyl glycidyl ether; 2-ethylhexyl glycidyl ether; heptafluoroisopropyl glycidyl ether, phenyl glycidyl ether; 4-methyl phenyl glycidyl ether; benzyl glycidyl ether; 2-phenylethyl glycidyl ether; 1,2-dihydropentafluoroisopropyl glycidyl ether; 1,2-trihydrotetrafluoroisopropyl glycidyl ether; 1,1-dihydrotetrafluoropropyl glycidyl ether; 1,1-dihydranonafluoropentyl glycidyl ether; 1,1-dihydropentadecafluorooctyl glycidyl ether; 1,1-dihydropentadecafluorooctyl-alpha-methyl glycidyl ether; 1,1-dihydropentadecafluorooctyl-beta-methyl glycidyl ether; 1,1-dihydropentadecafluorooctyl-alpha-ethyl glycidyl ether; 2,2,2-trifluoro ethyl glycidyl ether.

Other comonomers with at least one ether linkage which are useful as comonomers to copolymerize with ethylene oxide are: glycidyl acetate; glycidyl chloroacetate; glycidyl butyrate; and glycidyl stearate; to name a few.

Typical unsaturated comonomers which can be polymerized with ethylene oxide are: allyl glycidyl ether; 4-vinylcyclohexyl glycidyl ether; alpha-terpinyl glycidyl ether; cyclohexenylmethyl glycidyl ether; p-vinylbenzyl glycidyl ether; allyphenyl glycidyl ether; vinyl glycidyl ether; 3,4-epoxy-1-pentene; 4,5-epoxy-2-pentene; 1,2-epoxy-5,9-cyclododecadiene; 3,4-epoxy-1-vinylchlohexene; 1,2-epoxy-5-cyclooctene; glycidyl acrylate; glycidyl methacrylate; glycidyl crotonate; glycidyl 4-hexenoate.

Other cyclic monomers suitable to copolymerize with ethylene oxide are cyclic ethers with four or more member-ring containing up to 25 carbon atoms except tetrahydropyran and its derivatives. Exemplary cyclic ethers with four or more member-ring are oxetane (1,3-epoxide), tetrahydrofuran (1,5-epoxide), and oxepane (1,6-epoxide) and their derivatives.

Other suitable cyclic monomers are cyclic acetals containing up to 25 carbon atoms. Exemplary cyclic acetals are trioxane, dioxolane, 1,3,6,9-tetraoxacycloundecane, trioxepane, troxocane, dioxepane and their derivatives.

Other suitable cyclic monomers are cyclic esters containing up to 25 carbon atoms. Exemplary cyclic esters are beta-valerolactone, epsilon-caprolactone, zeta-enantholactone, eta-caprylactone, butyrolactone and their derivatives. The low molecular weight polyether oligomer prepared by the method detailed immediately above then can be reacted with a variety of chain extenders and modified with a selected salt to form the electrostatic dissipative polymer additive or antistatic agent of the present invention.

A preferred embodiment of the polyester-ether block copolymer comprises the reaction product of ethylene glycol, terephthalic acid or dimethyl terephthalate and polyethylene glycol. These and other examples of other polyester-ether copolymers which can be utilized are set forth in the Encyclopedia of Polymer Science and Engineering, Vol. 12, John Wiley & Sons, Inc., NY, N.Y., 1988, pages 49-52, as well as U.S. Patent Nos. 2,623,031; 3,651,014; 3,763,109; and 3,896,078.

Alternatively, the low molecular weight polyether oligomer can be reacted to form an electrostatic dissipative agent comprising one or more polyamide blocks as well as one or more low molecular weight polyether oligomer blocks. Alternatively, the low molecular weight polyether oligomer may be reacted with the polyamide in the presence of a diacid to form a polyether ester amide. Further information on this type of polymer can be found in U.S. Patent No. 4,332,920.

Referring first to the polyester intermediate, a hydroxyl terminated, saturated polyester polymer is synthesized by reacting excess equivalents of diethylene glycol with considerably lesser equivalents of an aliphatic, preferably an alkyl, dicarboxylic acid having four to ten carbon atoms where the most preferred is adipic acid.

The hydroxyl terminated polyester oligomer intermediate is further reacted with considerably excess equivalents of non-hindered diisocyanate along with extender glycol in a so-called one-shot or simultaneous co-reaction of oligomer, diisocyanate, and extender glycol to produce the very high molecular weight linear polyurethane having an average molecular weight broadly from about 60,000 to about 500,000, preferably from about 80,000 to about 180,000, and most preferably from about 100,000 to about 180,000.

Alternatively, an ethylene ether oligomer glycol intermediate comprising a polyethylene glycol can be co-reacted with non-hindered diisocyanate and extender glycol to produce the high molecular weight, polyurethane polymer. Useful polyethylene glycols are linear polymers of the general formula H-(OCH₂ CH₂)ₙ-OH where n is the number of repeating ethylene ether units and n is at least 11 and between 11 and about 115. On a molecular weight basis, the useful range of polyethylene glycols have an average molecular weight from about 500 to about 5000 and preferably from about 700 to about 2500. Commercially available polyethylene glycols useful in this invention are typically designated as polyethylene glycol 600, polyethylene glycol 1500, and polyethylene glycol 4000.

In accordance with this invention, high molecular weight thermoplastic polyurethanes are produced by reacting together preferably in a one-shot process the ethylene ether oligomer glycol intermediate, an aromatic or aliphatic non-hindered diisocyanate, and an extender glycol. On a mole basis, the amount of extender glycol for each mole of oligomer glycol intermediate is from about 0.1 to about 3.0 moles, desirably from about 0.2 to about 2.1 moles, and preferably from about 0.5 to about 1.5 moles. On a mole basis, the high molecular weight polyurethane polymer comprises from about 0.97 to about 1.02 moles, and preferably about 1.0 moles of non-hindered diisocyanate for every 1.0 total moles of both the extender glycol and the oligomer glycol (i.e., extender glycol+oligomer glycol-1.0).

Useful non-hindered diisocyanates comprise aromatic non-hindered diisocyanates and include, for example, 1,4-diisocyanatobenzene (PPDI), 4,4'-methylene-bis(phenyl isocyanate) (MDI), 1,5-naphthalene diisocyanate (NDI), m-xylene diisocyanate (XDI), as well as non-hindered, cyclic aliphatic diisocyanates such as 1,4-cyclohexyl diisocyanate (CHDI), and H₁₂ MDI. The most preferred diisocyanate is MDI. Suitable extender glycols (i.e., chain extenders) are aliphatic short chain glycols having two to six carbon atoms and containing only primary alcohol groups. Preferred glycols include diethylene glycol, 1,3-propane diol, 1,4-butane diol, 1,5-pentane diol, 1,4-cyclohexane-dimethanol, hydroquinone di(hydroxyethyl)ether, and 1,6-hexane diol with the most preferred glycol being 1,4-butane diol.

In accordance with the present invention, the hydroxyl terminated ethylene ether oligomer intermediate, the non-hindered diisocyanate, and the aliphatic extender glycol are co-reacted simultaneously in a one-shot polymerization process at a temperature above about 100°C and usually about 120°C or 180°C, whereupon the reaction is exothermic and the reaction temperature is increased to about 200°C to above 250°C.

In some embodiments, the inherently dissipative polymer of the present invention is: a polyethylene glycol (PEG)-based thermoplastic polyurethane (TPU); a combination of a PEG-based TPU and polypropylene; a combination of a PEG-based TPU and styrene butadiene rubber; a combination of a PEG-based TPU and glycol modified polyethylene terephthalate; or any combination thereof.

### The Halogen-Free Metal Salt

The compositions of the present invention include a halogen-free metal salt of an amidoalkanesulfonic acid, a hydrocarbyl-substituted benzenesulfonic acid, or a mixture thereof. The salts of the present invention may also be a salt of a polymer derived from a halogen-free metal salt of an amidoalkanesulfonic acid, a hydrocarbyl-substituted benzenesulfonic acid, or a mixture thereof.

In some embodiments, the salt is a halogen-free metal salt of an amidoalkanesulfonic acid or polymer derived from said acid where said acid is represented by the formula: 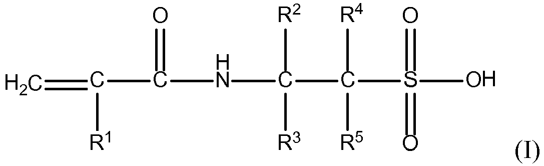 wherein R¹ is hydrogen or a hydrocarbyl group; and each R², R³, R⁴ and R⁵ is independently hydrogen, a hydrocarbyl group, or -CH₂SO₃H. In some embodiments, R¹ contains from 1 to 7 carbon atoms or from 1 to 6, 1 to 3 or is an mixture of hydrogen and hydrocarbyl groups containing from 1 to 3 carbon atoms. In some embodiments R¹ is hydrogen. In some embodiments, each R², R³, R⁴ and R⁵ is independently hydrogen or a hydrocarbyl group containing from 1 to 16 or from 1 to 7 carbon atoms or even from 1 to 6, 3 or even 2 carbon atoms.

One suitable example of these materials is 2-acrylamido-2-methylpropane sulfonic acid (The commercial grade material is believed to include a byproduct fraction containing two sulfonic acid groups as described above. This and related materials are similarly considered to be a part of the present invention.) This material is commercially available from The Lubrizol Corporation as AMPS® monomer. Other useful materials of this type include 2-acrylamidoethanesulfonic acid, 2-acrylamidopropanesulfonic acid, 2-methacrylamidopropanesulfonic acid, and 2-methacrylamido-2-methylpropanesulfonic acid. Such materials and methods for their preparation are disclosed, for instance, in U.S. Patent Nos. 3,544,597 and US 6,448,347.

In some embodiments, the salt is a halogen-free metal salt of an amidoalkanesulfonic acid or polymer derived from said acid where said acid is a bis-amidoalkanesulfonic acid. In such embodiments, the bis-amidoalkanesulfonic acid or polymer derived from said acid may be represented by the formula: 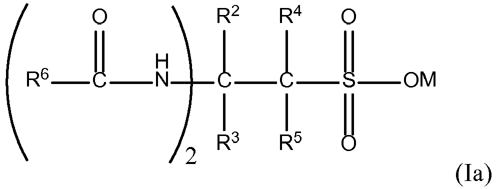 wherein R⁶ is a hydrocarbyl group; and each R² and R³ is independently hydrogen or a hydrocarbyl group, and M is hydrogen or the cation described below, with all other groups having the same definitions provided above unless otherwise noted.

In some embodiments, R⁶ can be the -C(R¹)=CH² shown in its place in Formula I, and in such embodiments, R¹ may have the same definition provided above.

In some embodiments, the salt is a halogen-free metal salt of a hydrocarbyl-substituted benzenesulfonic acid or polymer derived from said acid where said acid is represented by the formula: 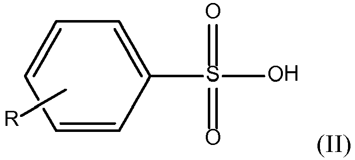 where R is a hydrocarbyl group containing from 2 to 24 or even 2 to 20 carbon atoms. In some embodiments, R contains from 2 to 15 or 11 to 15 carbon atoms. In some embodiments, the acid of formula (II) may contain one or more additional substituent groups, where the additional substituent group may be located anywhere on the aromatic ring, just as the R group above is shown, and may contain 1 to 2 carbon atoms.

Suitable examples include alkenyl and/or alkyl substituted benzenesulfonic acids or polymer derived thereof. In some embodiments, the salt is derived from an alkenyl substituted benzenesulfonic acid such as styrene sulfonic acid and/or sulfonates. In some embodiments, the salt is derived from an alkyl substituted benzenesulfonic acid such as linear alkyl benzenesulfonic acids and/or sulfonates.

The salts of the present invention are formed by salting the acids described above with lithium. According to the present invention, the salts of the present invention are lithium salts.

As noted above, the salts of the present invention may be salts of polymers derived from one or more of the acids described above. These polymers may be homopolymers, copolymers or even terpolymers. Well-known methods and materials, such as acrylic acid and similar materials described in the sections above, may be used in the polymerizations of the acids described herein.

In some embodiments, the salts of the present invention include: a lithium salt of an amidoalkanesulfonic acid represented by the formula (I) above; a lithium salt of styrene sulfonic acid; a copolymer of a lithium salt of styrene sulfonic acid and acrylic acid; a copolymer of a lithium salt of an amidoalkanesulfonic acid represented by the formula (I) above and acrylic acid; a terpolymer of a lithium salt of an amidoalkanesulfonic acid represented by the formula (I) above, a lithium salt of styrene sulfonic acid, and acrylic acid; or combinations thereof. In additional embodiments, sodium equivalents of any of the lithium examples described above may also be prepared.

While the exact mechanism of attachment and/or attraction of the salt to the polymer reaction product is not completely understood, the salt can unexpectedly improve the surface and volume resistivities of the resulting polymer, and may accomplish this without the presence of unacceptably high levels of extractable anions. Moreover, the static decay times may remain in an acceptable range, that is, the times are not too fast or too slow.

The compositions of the present invention may also contain one or more additional salts that are effective as an ESD additive. In some embodiments, these additional salts include metal-containing salts that contain a metal other than lithium. These additional salts may also include halogen-containing salts. Such salts include metal-containing salts, salt complexes, or salt compounds formed by the union of metal ion with a non-metallic ion or molecule. The amount of salt present may be an amount effective to provide improved ESD properties to the overall composition. The optional salt component may be added during the one-shot polymerization process.

Suitable salts that may be used in combination with those of the present invention include halogen-free lithium-containing salt such as those represented by the formula: 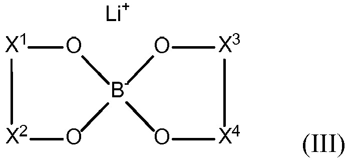 wherein each -X¹-, -X²-, -X³- and -X⁴- is independently -C(O)-, -C(R¹R²)-, -C(O)-C(R¹R²)- or -C(R¹R²)-C(R¹R²)- where each R¹ and R² is independently hydrogen or a hydrocarbyl group and wherein the R¹ and R² of a given X group may be linked to form a ring. In some embodiments, the salt is represent by Formula III wherein -X¹-, -X²-, -X³- and -X⁴- are -C(O)-.

Suitable salts also include the open, -ate structures of such salts, including Lithium bis(oxalate)borate.

In some embodiments, the halogen-free lithium-containing salt comprises lithium bis(oxalato)borate, lithium bis(glycolato)borate, lithium bis(lactato)borate, lithium bis(malonato)borate, lithium bis(salicylate)borate, lithium (glycolato,oxalato) borate, or combinations thereof.

Additional examples of salts that may be used in combination with those of the present invention include: LiClO₄, LiN(CF₃SO₂)₂, LiPF₆, LiAsF₆, LiI, LiCl, LiBr, LiSCN, LiSO₃CF₃, LiNO₃, LiC(SO₂CF₃)₃, Li₂S, and LiMR₄, where M is A1 or B, and R is a halogen, hydrocarbyl, alkyl or aryl group. In one embodiment, the salt is Li N(CF₃ SO₂)₂, which is commonly referred to as lithium trifluoromethane sulfonamide, or the lithium salt of trifluoromethane sulfonic acid. The effective amount of the selected salt added to the one-shot polymerization may be at least about 0.10, 0.25, or even 0.75 parts by weight based on 100 parts by weight of the polymer.

The compositions of the present invention may also include a non-metal containing anti-stat additives, such as ionic liquids. Suitable liquids include tri-n-butylmethylammonium bis-(trifluoroethanesulfonyl)imide (available as FC-4400 from 3M™), one or more the Basionics™ line of ionic liquids (available from BASF™), and similar materials.

In some embodiments, the present invention allows for the use of solvent with the metal containing salt. The use of a solvent, may in some embodiments, allow a lower charge of salt to provide the same benefit in ESD properties. Suitable solvents include ethylene carbonate, propylene carbonate, dimethyl sulfoxide, tetramethylene sulfone, tri- and tetra ethylene glycol dimethyl ether, gamma butyrolactone, and N-methyl-2-pyrrolidone. When present, the solvent may be used at least about 0.10, 0.50 or even 1.0 parts by weight based on 100 parts by weight of the polymer. In some embodiments, the compositions of the present invention are substantially free of to free of any or all of the solvents described herein.

In other embodiments, the compositions of the present invention are substantially free of to free of any or all of the metal containing salts and/or substantially free of to free of any ESD additives except for the a halogen-free metal salts of an amidoalkanesulfonic acid, a hydrocarbyl-substituted benzenesulfonic acid, or a mixture thereof, or a polymer derived from a halogen-free metal salt of an amidoalkanesulfonic acid, a hydrocarbyl-substituted benzenesulfonic acid, or a mixture thereof, described above.

The effective amount of the selected salt in the overall composition may be at least about 0.10 parts based on 100 parts of the polymer, and in some embodiments at least about 0.25 parts or even at least about 0.75 parts. In some embodiments, these amounts are with respect to each individual salt present in the composition. In other embodiments, the amounts apply to the total amount of all salts present in the composition.

### Additional Additives

The compositions of the present invention may further include additional useful additives, where such additives can be utilized in suitable amounts. These optional additional additives include opacifying pigments, colorants, mineral and/or inert fillers, stabilizers including light stabilizers, lubricants, UV absorbers, processing aids, antioxidants, antiozonates, and other additives as desired. Useful opacifying pigments include titanium dioxide, zinc oxide, and titanate yellow. Useful tinting pigments include carbon black, yellow oxides, brown oxides, raw and burnt sienna or umber, chromium oxide green, cadmium pigments, chromium pigments, and other mixed metal oxide and organic pigments. Useful fillers include diatomaceous earth (superfloss) clay, silica, talc, mica, wallostonite, barium sulfate, and calcium carbonate. If desired, useful stabilizers such as antioxidants can be used and include phenolic antioxidants, while useful photostabilizers include organic phosphates, and organotin thiolates (mercaptides). Useful lubricants include metal stearates, paraffin oils and amide waxes. Useful UV absorbers include 2-(2'-hydroxyphenol) benzotriazoles and 2-hydroxybenzophenones. Additives can also be used to improve the hydrolytic stability of the TPU polymer. Each of these optional additional additives described above may be present in, or excluded from, the compositions of the present invention.

When present, these additional additives may be present in the compositions of the present invention from 0 or 0.01 to 5 or 2 weight percent of the composition. These ranges may apply separately to each additional additive present in the composition or to the total of all additional additives present.

### Industrial Application

The compositions described herein are prepared by mixing the halogen-free metal-containing salt described above into the inherently dissipative polymer described above. In addition, one or more additional salts, polymers and/or additives may be present. The salt may be added to the polymer in various ways, some which may be defined as a chemical or in-situ process and some which may be defined as a physical or mixing process.

In some embodiments, the halogen-free metal-containing salt is added to the inherently dissipative polymer during the polymerization of the polymer, resulting in the inherently dissipative polymer composition. The salt can be added to one or more of the reactants used in the preparation of the inherently dissipative polymer or may be introduced with the use of a carrier solvent. In some embodiments, the salt may be dispersed into the polyol and/or the chain extender and then the polymerization can be carried out. Depending on the inherently dissipative polymer, the polymerization reaction may take place continuously in a reactive extruder or similar piece of equipment, or a batch process may be used. In any of these situations, the salt described herein may be added either before, during, or after the polymerization reaction, resulting in the inherently dissipative polymer composition.

In some embodiments, the halogen-free metal-containing salt is added to the inherently dissipative polymer via wet absorption, resulting in the inherently dissipative polymer composition.

In some embodiments, the halogen-free metal-containing salt is compounded and/or blended into the inherently dissipative polymer, resulting in the inherently dissipative polymer composition.

The resulting compositions of the present invention include one or more of the inherently dissipative polymers described above in combination with one or more of the halogen-free metal-containing salts described above. The compositions may include an effective amount of the salt, said salt being compatible with the polymer, such that the resulting composition has a surface resistivity of from about 1.0x10⁶ ohm/square to about 1.0x10¹² ohm/square, as measured by ASTM D-257.

In some embodiments, the compositions of the present invention are substantially free to free of fluorine atoms, chlorine atoms, bromine atoms, iodine atoms, astatine atoms, or combinations thereof (including ions of said atoms). In some embodiments, the compositions of the present invention are substantially free to free of salts and/or other compounds containing fluorine, chlorine, bromine, iodine, and/or astatine atoms, and/or ions of one or more thereof. In some embodiments, the compositions of the present invention are substantially free to free of all halogens atoms, halogen-containing salts, and/or other halogen-containing compounds. By substantially free, it is meant that the compositions contain less than 10,000 parts per million or even 10,000 parts per billion of fluorine/fluoride, chorine/chloride, bromine/bromide, iodine/iodide, astatine/astatide, or combinations of the atoms/ions thereof.

These polymer compositions are useful in forming a plastic alloy for use with an electronic device, due to their beneficial inherently static dissipative properties. The compositions may be used in the preparation of polymeric articles, especially where ESD properties are of a concern. Examples of applications in which the compositions described above may be used building and construction materials and equipment, machine housings, manufacturing equipment, and polymeric sheets and films. More specifically, examples include: equipment that handles fuel, other flammable liquids or dry powders; business equipment; coatings for floors such as for clean rooms and construction areas; clean room construction, equipment and supplies such as garments, floorings, mats, electronic packaging, housings, chip holders, chip rails, tote bins, tote bin tops, conveyor belts, wires and cables; medical applications; battery parts such as dividers and/or separators, etc. The compositions of the present invention may be used in any articles that require some level of ESD properties.

In one embodiment, the compositions of the present invention are used to make polymeric articles to be used as: packaging materials for electronic parts; internal battery separators for use in the construction of lithium-ion batteries; clean room supplies and construction materials; antistatic conveyor belts; fibers; parts for office machines; antistatic garments and shoes, or combinations thereof.

The compositions can be used with various melt processing techniques including injection molding, compression molding, slush molding, extrusion, thermoforming cast, rotational molding, sintering, vacuum molding, blown molding, and die casting. Articles of this invention may also be made from resins produced by the suspension, mass, emulsion or solution processes.

It is known that some of the materials described above may interact in the final formulation, so that the components of the final formulation may be different from those that are initially added. For instance, metal ions can migrate to other acidic or anionic sites of other molecules. The products formed thereby, including the products formed upon employing the composition of the present invention in its intended use, may not be susceptible of easy description. Nevertheless, all such modifications and reaction products are included within the scope of the present invention; the present invention encompasses the composition prepared by admixing the components described above.

### EXAMPLES

The invention will be further illustrated by the following examples, which sets forth particularly advantageous embodiments. The examples are provided to illustrate the present invention

### Example Set 1.

A set of ESD compositions is prepared by introducing a specific amount of a halogen-free metal salt into one or more TPU's, as described in the table below. In this example set, the salt is introduced in an aqueous solution whih is applied to pellets of the TPU. Thus, the salt is added via wet absorption from the solution to the TPU pellets, which are then dried. Each example is then compression molded or injection molded into a plaque and tested to determine its resistivity properties. The results of this testing are provided in the table below:

**Table I - Properties of Example Set 1 ESD TPU Compositions**

| | **Example ID** | **Salt Used** | **%wt Salt in Composition** | SR **(ohm/sq)¹** |
|---|---|---|---|---|
| PEG-based TPU 1 | **1-A (C)** | None | 0.00 | 5 E 9 |
| | **1-B (I)** | Na Salt 1 ² | 1.26 | 1.6 E 9 |
| | **1-C (I)** | Na Salt 1 ² | 1.68 | 1.4 E 8 |
| | **1-D (I)** | Na Salt 1 ² | 2.00 | 1.2 E 8 |
| | **1-E (I)** | Na Salt 1 ² | 2.60 | 9.0 E 7 |
| | **1-F (I)** | Na Salt 1 ² | 3.02 | 7.7 E 7 |
| | **1-G (I)** | Li Salt 1 ³ | 1.68 | 9.2 E 7 |
| | **1-H (I)** | Li Salt 1 ³ | 2.00 | 6.3 E 7 |
| | **1-I (I)** | Li Salt 1 ³ | 3.31 | 3.3 E 7 |
| HDO/BDO-Adipate based TPU | **1-J (C)** | None | 0.00 | 9.0 E 10 |
| | **1-K (I)** | Li Salt 1 ³ | 2.50 | 1.1 E 10 |
| PTMEG based TPU | **1-L (C)** | None | 0.00 | 1.5 E 11 |
| | **1-M (I)** | Li Salt 1 ³ | 2.50 | 6.7 E 8 |

| | | | | |
|---|---|---|---|---|
| *1* - *Resistivity is measured per ASTM D257 at 50% relative humidity. Values are reported in the following format: 1E8 which may also be written as 1x10⁸. SR stands for surface resistivity.* *2* - *Na Salt 1 is a sodium salt of an* amidoalkanesulfonic *acid.* (not according to the invention) *3* - *Li Salt 1 is a lithium salt of an* amidoalkanesulfonic *acid.* | | | | |

The results show that the halogen free metal containing salts of the invention allow for ESD compositions with significantly reduced surface resistivity.

### Example Set 2.

A set of ESD compositions is prepared by introducing a specific amount of a halogen-free metal salt into TPU's using the same procedures and testing described for Example Set 1. The results are provided in the table below:

**Table II - Properties of Example Set 2 ESD TPU Compositions**

| | **Example ID** | **Salt Used** | **%wt Salt in Composition** | SR **(ohm/sq)¹** |
|---|---|---|---|---|
| PEG-based TPU 2 | **2-A (C)** | None | 0.0 | 1.1 E 10 |
| | **2-B (I)** | Li Salt 2 ² | 1.3 | 2.0 E 8 |
| | **2-C (I)** | Li Salt 3 ³ | 2.0 | 4 E 9 |
| | **2-D (I)** | Li Salt 4 ⁴ | 2.0 | 6 E 9 |

| | | | | |
|---|---|---|---|---|
| *1* - *Resistivity is measured per ASTM D257 at 50% relative humidity. Values are reported in the following format: 1E8 which may also be written as 1x10⁸. SR stands for surface resistivity.* *2* - *Li Salt 2 is a lithium salt of a hydrocarbyl-substituted benzenesulfonic acid.* *3* - *Li Salt 3 is a lithium salt of a copolymer of a hydrocarbyl-substituted benzenesulfonic acid and acrylic acid. The copolymer was neutralized to a pH of about* 7 *by the addition of a LiOH solution.* *4* - *Li Salt 4 is a lithium salt of a copolymer of an* amidoalkanesulfonic *acid and acrylic acid. The copolymer was neutralized to a pH of about* 7 *by the addition of a LiOH solution.* | | | | |

The results show that the halogen free metal containing salts of the invention allow for ESD compositions with significantly reduced surface resistivity. Unless otherwise indicated, all percent values, ppm values and parts values are on a weight basis. Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. As used herein, and unless otherwise defined, the expression "substantilly free of" may mean that an amount that does not materially affect the basic and novel characteristics of the composition under consideration, in some embodiments, it may also mean no more than 5%, 4%, 2%, 1%, 0.5% or even 0.1% by weight of the material is questions is present, in still other embodiments, it may mean that less than 1,000 ppm, 500 ppm or even 100 ppm of the material in question is present. These various limits described above may also be applied to the term "halogen-free" as used herein. Furthermore, the expression "consisting essentially of" permits the inclusion of substances that do not materially affect the basic and novel characteristics of the composition under consideration.

## Claims

1. A composition comprising:
(a) an inherently dissipative polymer including a thermoplastic polyurethane made by reacting (i) at least one polyol intermediate with (ii) at least one diisocyanate and (iii) at least one chain extener; and
(b) a halogen-free metal salt of an amidoalkanesulfonic acid, a hydrocarbyl-substituted benzenesulfonic acid, or a mixture thereof, or a polymer derived from said halogen-free metal salt of an amidoalkanesulfonic acid, a hydrocarbyl-substituted benzenesulfonic acid, or a mixture thereof, wherein said halogen-free metal salt is a salt of lithium.

2. The composition of claim 1, wherein component (b) comprises a halogen-free metal salt of an amidoalkanesulfonic acid or polymer derived from said acid where said acid is represented by the formula: 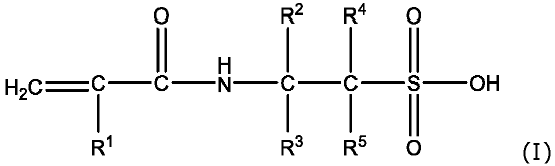 wherein R¹ is hydrogen or a hydrocarbyl group; and each R², R³, R⁴ and R⁵ is independently hydrogen, a hydrocarbyl group, or -CH₂SO₃H.

3. The composition of claim 1, wherein component (b) comprises a halogen-free metal salt of a hydrocarbyl-substituted benzenesulfonic acid or polymer derived from said acid where said acid is represented by the formula: 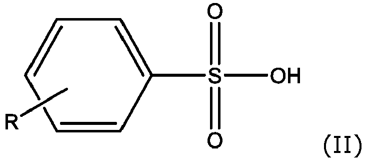 where R is a hydrocarbyl group containing from 2 to 24 carbon atoms.

4. The composition of any of the claims 1 to 3, wherein the composition further comprises one or more lithium-containing salts other than component (b).

5. The composition of any of the claims 1 to 4, wherein the surface resistance of the resulting composition, as measured by ASTM D-257, is from 1.0x10⁶ ohm/square to 1.0x10¹² ohm/square.

6. The composition of claim 1, wherein the polyol intermediate of the inherently dissipative polymer is a polyether selected from polyethylene glycol, polypropylene glycol, ethylene oxide/propylene oxide copolymer, or a combination thereof.

7. The composition of any of the claims 1 to 6, wherein (a), the polyol intermediate comprises an intermediate derived from at least one dialkylene glycol and at least one dicarboxylic acid, or an ester or anhydride thereof; and wherein (a) may optionally further comprise a polyester polyol.

8. The composition of any of the claims 1 to 7, wherein the inherently dissipative polymer is blended with one or more polymers.

9. The composition of claim 8, wherein the blend of polymers comprises a thermoplastic polyurethane (TPU), a polycarbonate, a polyolefin, a styrenic polymer, an acrylic polymer, a polyoxymethylene polymer, a polyamide, a polyphenylene oxide, a polyphenylene sulfide, a polyvinylchloride, a chlorinated polyvinylchloride, an ethylene vinyl acetate copolymer (EVA), a thermoplastic elastomer (TPE), or any combination thereof.

10. A shaped polymeric article comprising the inherently dissipative polymer composition of any of the claims 1 to 9.

11. The polymeric article of claim 10, wherein the article comprises:
packaging materials for electronic parts; internal battery separators for use in the construction of lithium-ion batteries; parts for clean room construction, equipment and supplies; parts for equipment that handles flammable liquids and/or dry powders; fibers, wires, or cables; or combinations thereof.

12. A process of making the inherently dissipative polymer composition as defined in claim 1, said process comprising the steps of:
mixing (a) an inherently dissipative polymer including a thermoplastic polyurethane made by reacting (i) at least one polyol intermediate with (ii) at least one diisocyanate and (iii) at least one chain extender and (b) a halogen-free metal salt of an amidoalkanesulfonic acid, a hydrocarbyl-substituted benzenesulfonic acid, or a mixture thereof, or a polymer derived from said halogen-free metal salt of an amidoalkanesulfonic acid, a hydrocarbyl-substituted benzenesulfonic acid, or a mixture thereof, wherein said halogen-free metal salt is a salt of lithium.

13. The process of claim 12, wherein component (b) is added to one or more of the reactants used in the preparation of component (a) and wherein component (b) is present during the polymerization reaction used to prepare component (a), resulting in the inherently dissipative polymer composition.

## Patentansprüche

1. Zusammensetzung, die Folgendes umfasst:
(a) ein inhärent dissipatives Polymer, das ein thermoplastisches Polyurethan beinhaltet, das durch Reagieren (i) wenigstens eines Polyol-Zwischenprodukts mit (ii) wenigstens einem Diisocyanat und (iii) wenigstens einem Kettenverlängerer hergestellt wird; und
(b) ein halogenfreies Metallsalz einer Amidoalkansulfonsäure, einer Hydrocarbyl-substituierten Benzolsulfonsäure oder ein Gemisch davon oder ein Polymer, das von dem halogenfreien Metallsalz einer Amidoalkansulfonsäure, einer Hydrocarbyl-substituierten Benzolsulfonsäure oder einem Gemisch davon abstammt, wobei das halogenfreie Metallsalz ein Salz von Lithium ist.

2. Zusammensetzung nach Anspruch 1, wobei Komponente (b) ein halogenfreies Metallsalz einer Amidoalkansulfonsäure oder ein Polymer umfasst, das von der Säure abstammt, wobei die Säure durch die folgende Formel dargestellt wird: 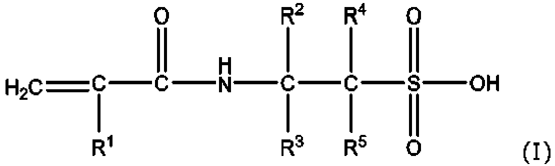 wobei R¹ Wasserstoff oder eine Hydrocarbylgruppe ist; und jedes R², R³, R⁴ und R⁵ unabhängig Wasserstoff, eine Hydrocarbylgruppe oder -CH₂SO₃H ist.

3. Zusammensetzung nach Anspruch 1, wobei Komponente (b) ein halogenfreies Metallsalz einer Hydrocarbyl-substituierten Benzolsulfonsäure oder ein Polymer umfasst, das von der Säure abstammt, wobei die Säure durch die folgende Formel dargestellt wird: 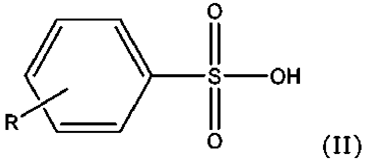 wobei R eine Hydrocarbylgruppe ist, die von 2 bis 24 Kohlenstoffatome enthält.

4. Zusammensetzung nach einem der Ansprüche 1 bis 3, wobei die Zusammensetzung ferner ein oder mehrere Lithium enthaltende Salze außer Komponente (b) umfasst.

5. Zusammensetzung nach einem der Ansprüche 1 bis 4, wobei der Oberflächenwiderstand der resultierenden Zusammensetzung, gemessen durch ASTM D-257, von 1,0 x 10⁶ Ohm/Quadrat bis 1,0 x 10¹² Ohm/Quadrat beträgt.

6. Zusammensetzung nach Anspruch 1, wobei das Polyol-Zwischenprodukt des inhärent dissipativen Polymers ein Polyether ist, der aus Polyethylenglycol, Polypropylenglycol, einem Ethylenoxid/Propylenoxid-Copolymer oder einer Kombination davon ausgewählt ist.

7. Zusammensetzung nach einem der Ansprüche 1 bis 6, wobei (a) das Polyol-Zwischenprodukt ein Zwischenprodukt, das von wenigstens einem Dialkylenglycol und wenigstens einer Dicarbonsäure abstammt, oder einen Ester oder ein Anhydrid davon umfasst; und wobei (a) optional ferner ein Polyesterpolyol umfassen kann.

8. Zusammensetzung nach einem der Ansprüche 1 bis 7, wobei das inhärent dissipative Polymer mit einem oder mehreren Polymeren geblendet wird.

9. Zusammensetzung nach Anspruch 8, wobei der Blend von Polymeren ein thermoplastisches Polyurethan (TPU), ein Polycarbonat, ein Polyolefin, ein Styrolpolymer, ein Acrylpolymer, ein Polyoxymethylenpolymer, ein Polyamid, ein Polyphenylenoxid, ein Polyphenylensulfid, ein Polyvinylchlorid, ein chloriertes Polyvinylchlorid, ein Ethylen-Vinylacetat-Copolymer (EVA), ein thermoplastisches Elastomer (TPE) oder eine beliebige Kombination davon umfasst.

10. Geformtes Polymererzeugnis, das die inhärent dissipative Polymerzusammensetzung nach einem der Ansprüche 1 bis 9 umfasst.

11. Polymererzeugnis nach Anspruch 10, wobei das Erzeugnis Folgendes umfasst:
Verpackungsmaterialien für elektronische Teile; interne Batterieseparatoren zur Verwendung bei dem Bau von Lithium-lonen-Batterien; Teile für Reinraumbau, -ausstattung und -bedarf;
Teile für eine Ausstattung, die brennbare Flüssigkeiten und/oder Löschpulver handhabt; Fasern, Drähte oder Kabel; oder Kombinationen davon.

12. Verfahren zum Herstellen der inhärent dissipativen Polymerzusammensetzung nach Anspruch 1, wobei das Verfahren die folgenden Schritte umfasst:
Mischen (a) eines inhärent dissipativen Polymers, das ein thermoplastisches Polyurethan beinhaltet, das durch Reagieren (i) wenigstens eines Polyol-Zwischenprodukts mit (ii) wenigstens einem Diisocyanat und (iii) wenigstens einem Kettenverlängerer hergestellt wird, und (b) eines halogenfreien Metallsalzes einer Amidoalkansulfonsäure, einer Hydrocarbyl-substituierten Benzolsulfonsäure oder eines Gemisches davon oder eines Polymers, das von dem halogenfreien Metallsalz einer Amidoalkansulfonsäure, einer Hydrocarbyl-substituierten Benzolsulfonsäure oder einem Gemisch davon abstammt, wobei das halogenfreie Metallsalz ein Salz von Lithium ist.

13. Verfahren nach Anspruch 12, wobei Komponente (b) zu einem oder mehreren der Reaktanten zugegeben wird, die bei der Gewinnung von Komponente (a) verwendet werden, und wobei Komponente (b) während der Polymerisationsreaktion vorliegt, die verwendet wird, um Komponente (a) zu gewinnen, woraus die inhärent dissipative Polymerzusammensetzung resultiert.

## Revendications

1. Composition comprenant:
(a) un polymère intrinsèquement dissipatif comportant un polyuréthane thermoplastique obtenu en faisant réagir (i) au moins un intermédiaire polyol avec (ii) au moins un diisocyanate et (iii) au moins un allongeur de chaîne ; et
(b) un sel métallique exempt d'halogène d'un acide amidoalcanesulfonique, d'un acide benzènesulfonique substitué par un hydrocarbyle ou d'un mélange de ceux-ci, ou un polymère dérivé dudit sel métallique exempt d'halogène d'un acide amidoalcanesulfonique, d'un acide benzènesulfonique substitué par un hydrocarbyle ou d'un mélange de ceux-ci, ledit sel métallique exempt d'halogène étant un sel de lithium.

2. Composition selon la revendication 1, dans laquelle le composant (b) comprend un sel métallique exempt d'halogène d'un acide amidoalcanesulfonique ou un polymère dérivé dudit acide, ledit acide étant représenté par la formule : 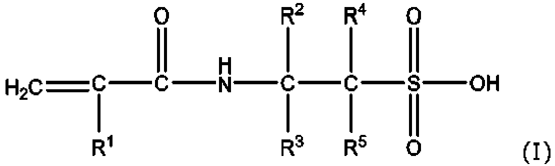 R¹ représentant l'hydrogène ou un groupe hydrocarbyle ; et chaque R², R³, R⁴ et R⁵ représentant indépendamment l'hydrogène, un groupe hydrocarbyle ou -CH₂SO₃H.

3. Composition selon la revendication 1, dans laquelle le composant (b) comprend un sel métallique exempt d'halogène d'un acide benzènesulfonique substitué par un hydrocarbyle ou ledit polymère dérivé dudit acide, ledit acide étant représenté par la formule : 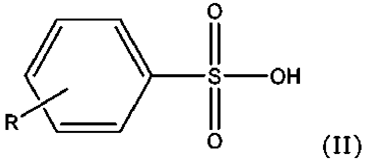 où chaque R représente indépendamment un groupe hydrocarbylène contenant de 2 à 24 atomes de carbone.

4. Composition selon l'une quelconque des revendications 1 à 3, dans laquelle la composition comprend en outre un ou plusieurs sels contenant du lithium autres que le composant (b).

5. Composition selon l'une quelconque des revendications 1 à 4, dans laquelle la résistance de surface de la composition résultante, telle que mesurée par la norme ASTM D-257, est de 1,0 x 10⁶ ohm/carré à 1,0 x 10¹² ohm/carré.

6. Composition selon la revendication 1, dans laquelle l'intermédiaire polyol du polymère intrinsèquement dissipatif est un polyéther choisi parmi le polyéthylène glycol, le polypropylène glycol, le copolymère oxyde d'éthylène/oxyde de propylène ou une combinaison de ceux-ci.

7. Composition selon l'une quelconque des revendications 1 à 6, dans laquelle (a), l'intermédiaire polyol comprend un intermédiaire dérivé d'au moins un dialkylène glycol et d'au moins un acide dicarboxylique, ou un ester ou un anhydride de celui-ci ; et dans laquelle (a) peut éventuellement comprendre en outre un polyester polyol.

8. Composition selon l'une quelconque des revendications 1 à 7, dans laquelle le polymère intrinsèquement dissipatif est mélangé à un ou plusieurs polymères.

9. Composition selon la revendication 8, dans laquelle le mélange de polymères comprend un polyuréthane thermoplastique (TPU), un polycarbonate, une polyoléfine, un polymère styrénique, un polymère acrylique, un polymère polyoxyméthylène, un polyamide, un oxyde de polyphénylène, un sulfure de polyphénylène, un polychlorure de vinyle, un polychlorure de vinyle chloré, un copolymère d'éthylène-acétate de vinyle (EVA), un élastomère thermoplastique (TPE) ou une quelconque combinaison de ceux-ci.

10. Article polymère mis en forme comprenant la composition de polymère intrinsèquement dissipatif selon l'une quelconque des revendications 1 à 9.

11. Article polymère selon la revendication 10, dans lequel l'article comprend :
des matériaux d'emballage pour pièces électroniques ; des séparateurs de batteries internes utilisés dans la construction de batteries au lithium-ion ; des pièces pour la construction de salles blanches, l'équipement et les fournitures ; des pièces pour équipement destiné à la manipulation de liquides inflammables et/ou de poudres sèches ; de fibres, de fils ou de câbles ; ou leurs combinaisons.

12. Procédé de fabrication de la composition polymère intrinsèquement dissipatif selon la revendication 1, ledit procédé comprenant les étapes consistant à :
mélanger (a) un polymère intrinsèquement dissipatif comportant un polyuréthane thermoplastique obtenu en faisant réagir (i) au moins un intermédiaire polyol avec (ii) au moins un diisocyanate et (iii) au moins un allongeur de chaîne et (b) un sel métallique exempt d'halogène d'un acide amidoalcanesulfonique, d'un acide benzènesulfonique substitué par un hydrocarbyle ou d'un mélange de ceux-ci, ou d'un polymère dérivé dudit sel métallique exempt d'halogène d'un acide amidoalcanesulfonique, d'un acide benzènesulfonique substitué par un hydrocarbyle ou d'un mélange de ceux-ci, ledit le sel métallique exempt d'halogène étant un sel de lithium.

13. Procédé selon la revendication 12, dans lequel le composant (b) est ajouté à un ou plusieurs des réactifs utilisés dans la préparation du composant (a) et dans lequel le composant (b) est présent pendant la réaction de polymérisation utilisée pour préparer le composant (a), donnant comme résultat la composition de polymère intrinsèquement dissipatif.
